# EUROPEAN PATENT APPLICATION

(11) **EP 2 020 360 A2**
(43) Date of publication of application: **04.02.2009**
(21) Application number: 08380187.8
(22) Date of filing: 26.06.2008
(51) Int. Cl.: B62B 9/18, B60B 9/06

(54) **A suspension for prams**

(30) Priority: 24.07.2007 ES 200701576 U
(71) Applicant: JANE S.A., 08184 Palau Solita I Plegamans (ES)
(72) Inventor: Jané Santamaria, Manuel, 08184 Palau Solita i Plegamans (Barcelona) (ES)
(74) Representative: Pastells Teixido, Manuel

(57) **Abstract**

A suspension for prams comprises a spring (5) being arranged between the leg (3) and the support (1) of the wheel (R). It is characterised in that the support (1) of the wheel (R) is articulately linked (2) to an extension of the leg (3) comprising a lateral appendage (4), the spring (5) being arranged between said appendage (4) and the support (1). The spring is housed in a pocket (7) of the support (1) and bears against the appendage (4) of the leg (3) with the intermediary of a cup (6), this latter being housed in a cap (8) being articulately linked (9) to the appendage (4) of the leg (3).

## Description

### FIELD OF THE INVENTION

Several suspension models for prams are already known which are mainly based on the action being exerted on a spring.

The arrangement of the spring varies according to the suspension model. For example in some cases the spring is arranged between the lower end of the leg and the wheel support, whereas in other cases it bears directly on the axle of the wheels.

### SUMMARY OF THE INVENTION

It is the object of this invention to improve this kind of suspensions in such a way as to achieve an efficient operation while at the same time forming an assembly wherein the spring is arranged in a concealed and thus protected arrangement, the suspension's general appearance being thus also improved.

A characterising feature for such a purpose lies in the fact that the wheel support is articulately linked to an extension of the leg, the spring being arranged between the support and a lateral appendage being solid with the leg.

The spring is housed between a pocket of the actual support and a cup bearing against the appendage of the leg, said cup being arranged in a cap being articulately linked to said appendage of the leg.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

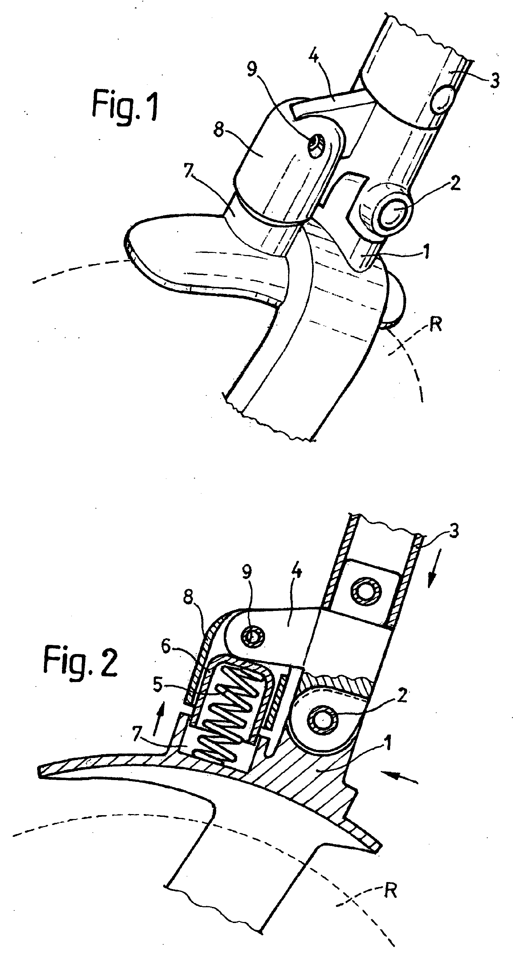

Fig. 1 depicts in a perspective view the suspension assembly; and
Fig. 2 shows said assembly in a sectional elevation.

### DETAILED DESCRIPTION

According to the drawings the suspension forms an assembly comprising the support (1) of the wheel (R), said support being linked in a pin-jointed connection by means of pin (2) to an extension of the leg (3), this latter's lower end having a lateral appendage (4) securedly attached to it, a spring (5) at its upper end bearing against said lateral appendage through the intermediary of a cup (6), said spring being at its lower end housed in a pocket (7) of the support (1).

The aforementioned cup (6) is housed in a cap (8) being linked in a pin-jointed connection by means of pin (9) to said appendage (4).

With the suspension in operation the support (1) articulately carries out a swinging motion around pin (2) and thereby compresses the spring (5) against the appendage (4).

## Claims

1. A suspension for prams which comprises a spring (5) being arranged between the leg (3) and the support (1) of the wheel (R), **characterised in that** the support (1) of the wheel (R) is articulately linked (2) to an extension of the leg (3) comprising a lateral appendage (4), the spring (5) being arranged between said appendage (4) and the support (1).

2. A suspension, as per claim 1, **characterised in that** the spring (5) is housed in a pocket (7) of the support (1) and bears against the appendage (4) of the leg (3) with the intermediary of a cup (6).

3. A suspension, as per claims 1 and 2, **characterised in that** the aforementioned cup (6) is housed in a cap (8) being articulately linked (9) to the appendage (4) of the leg (3).
